(19) Europäisches Patentamt
European Patent Office
Office européen des brevets

(11) **EP 2 819 895 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **13706464.8**

(22) Anmeldetag: **19.02.2013**

(51) Int Cl.:
*B60S 1/26* (2006.01)  *B60S 1/16* (2006.01)

(86) Internationale Anmeldenummer:
**PCT/EP2013/053248**

(87) Internationale Veröffentlichungsnummer:
**WO 2013/127658 (06.09.2013 Gazette 2013/36)**

(54) **SCHEIBENWISCHERANTRIEB**

WINDSHIELD WIPER DRIVE

ENTRAÎNEMENT D'ESSUIE-GLACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2012 DE 102012202925**

(43) Veröffentlichungstag der Anmeldung:
**07.01.2015 Patentblatt 2015/02**

(73) Patentinhaber: **Robert Bosch GmbH**
**70442 Stuttgart (DE)**

(72) Erfinder:
• **MOENCH Jochen**
**76547 Sinzheim (DE)**
• **DOMMSCH, Hans-Peter**
**77839 Lichtenau (DE)**

(56) Entgegenhaltungen:
EP-A2- 1 195 302     DE-A1-102008 054 557
FR-A1- 2 893 575     US-A- 6 040 667

EP 2 819 895 B1

**Beschreibung**

Die Erfindung betrifft einen Scheibenwischerantrieb nach dem Oberbegriff von Anspruch 1 zum Einsatz an einem Kraftfahrzeug.

Stand der Technik

Eine Scheibenwischeinrichtung wird an einem Kraftfahrzeug eingesetzt, um ein Wischerblatt mittels eines Wischerarms in einer oszillierenden Drehbewegung um eine Antriebswelle über eine Sichtscheibe des Kraftfahrzeugs zu führen. Die oszillierende Drehbewegung wird dabei von einem Scheibenwischerantrieb bereitgestellt, der einen Elektromotor und ein Getriebe umfasst. Häufig ist das Getriebe ein Schraubrad- oder Schneckengetriebe, bei dem der Elektromotor eine Schneckenwelle antreibt, die in einem Schraubrad bzw. Schneckenrad kämmt, welches mit der Antriebswelle verbunden ist. In einer Ausführungsform des Scheibenwischerantriebs wird die oszillierende Drehbewegung durch eine Drehrichtungsänderung des Elektromotors gesteuert, wenn sich die Antriebswelle bzw. der Wischerarm oder das Wischerblatt in einer Wendeposition befinden.

Beim Umkehren der Drehrichtung (Reversieren) des Elektromotors in der Wendeposition kann ein Spiel zwischen Elementen des Getriebes zu einer erhöhten Geräuschbelastung und zu einer ungleichförmigen Bewegung des angetriebenen Wischerblatts (Flattern) führen. Zur Minimierung des Spiels zwischen der Schneckenwelle und dem Schneckenrad sind eine Anzahl von Maßnahmen bekannt, zu denen beispielsweise ein genaues Einstellen eines Abstands zwischen Drehachsen der Schneckenwelle und des Schneckenrades mittels einer exzentrischen Lagerbuchse oder eine Verwendung von vorbestimmten Zahnradklassen oder einer axial verstellbaren konischen Schneckenwelle zählen.

Mit abnehmendem Spiel zwischen der Schneckenwelle und dem Schneckenrad steigen jedoch auch ein Verschleiß und ein Bewegungswiderstand der beiden Elemente an. Für einen optimierten Betrieb sowohl im Bereich der Wendepositionen als auch im Bereich außerhalb der Wendepositionen ist es daher erforderlich, ein Spiel zwischen der Schneckenwelle und dem Schneckenrad so zu wählen, dass das Schneckengetriebe im gesamten Betriebsbereich zufriedenstellend funktioniert.

Der Erfindung liegt die Aufgabe zugrunde, einen bezüglich Lauf und Präzision verbesserten Scheibenwischerantrieb für ein Scheibenwischersystem eines Kraftfahrzeugs anzugeben.

Die Erfindung löst dieses Problem mittels eines Scheibenwischerantriebs mit den Merkmalen von Anspruch 1. Unteransprüche geben bevorzugte Ausführungsform wieder.

Dokument DE 10 2008 054 557 A1 offenbart einen Scheibenwischerantrieb gemäß dem Oberbegriff des Anspruchs 1.

Offenbarung der Erfindung

Ein erfindungsgemäßer Scheibenwischerantrieb zum oszillierenden Antrieb einer Antriebswelle zwischen zwei Wendepositionen umfasst ein verzahntes Antriebsrad, das konzentrisch mit der Antriebswelle verbunden ist, und eine verzahnte Abtriebseinrichtung, die in dem Antriebsrad kämmt. Dabei ist das Abtriebsrad derart ungleichmäßig geformt, dass ein Zahnflankenspiel zwischen der Antriebseinrichtung und dem Abtriebsrad im Bereich der ersten Wendeposition gegenüber dem Bereich zwischen den Wendepositionen verringert ist. Ferner ist ein Zusammenhang zwischen einem Drehwinkel des Abtriebsrads und dem Zahnflankenspiel stetig.

Durch den stetigen Zusammenhang zwischen dem Drehwinkel und dem Zahnflankenspiel können Anregungen im Getriebe, die durch eine sprunghafte Veränderung des Zahnflankenspiels bedingt sein und zu Geräuschen und Belastungsspitzen führen können, vermieden werden.

In einer bevorzugten Ausführungsform ist das Zahnflankenspiel in Bereichen beider Wendepositionen verringert und der Zusammenhang ist symmetrisch zu einer Mittelposition, die zwischen den Wendepositionen liegt. Insbesondere kann die Mittelposition entlang der Verzahnung des Abtriebsrads auf halbem Weg zwischen den Wendepositionen liegen. Die kontinuierliche Veränderung des Zahnflankenspiels während des Betriebs des Scheibenwischerantriebs kann so besonders organisch gestaltet sein. Dabei kann das Zahnflankenspiel im Bereich der Mittelposition am größten sein, wo eine hohe Last und/oder eine hohe Geschwindigkeit eines mit der Antriebswelle verbundenen Wischerarms bzw. eines mit diesem verbundenen Wischerblatts gefordert sind. So kann ein geräusch- und verschleißarmer Betrieb im Bereich der Mittelposition mit einem genauen und spielarmen Betrieb im Bereich der Wendepositionen kombiniert sein.

Ein Verzahnungsmittelpunkt einer Verzahnung des Abtriebsrads kann gegenüber der Drehachse des Abtriebsrads versetzt sein. So kann das Abtriebsrad ohne bewegliche Abschnitte exakt und mit geringem konstruktiven Aufwand herstellbar sein, um den vorbestimmten Zusammenhang zwischen dem Drehwinkel und dem Zahnflankenspiel bereit zustellen.

Der Verzahnungsmittelpunkt kann bezüglich der Drehachse in einem Abschnitt der Verzahnung gegenüber liegen, der sich mit der Antriebseinrichtung in Eingriff befindet, wenn sich das Abtriebsrad in der Mittelposition befindet. Ein solchermaßen erzielbarer Zusammenhang zwischen dem Zahnflankenspiel und dem Drehwinkel des Abtriebsrads kann zu einem besonders gleichmäßigen Lauf des Scheibenwischerantriebs beitragen.

Im Bereich einer der Wendepositionen kann das Zahnflankenspiel innerhalb der geltenden Toleranzen negativ sein. Eine Klemmwirkung, die umgekehrt proportional zum Zahnflankenspiel sein kann, kann so im Bereich der Wendepositionen vergrößert sein. Eine von außen auf einen mit der Antriebswelle verbundenen Wischerarm bzw. eine an ein mit dem Wischerarm verbundenes Wischerblatt angreifende Kraft, beispielsweise durch eine Windlast, kann so erst bei höheren Drehmomenten zu einem Wegbewegen der Antriebswelle führen. Besonders bei einem sogenannten Wischerdirektantrieb, bei dem die Abtriebswelle des Getriebes unmittelbar mit dem Wischerarm verbunden ist, kann diese vergrößerte Klemmwirkung von Bedeutung sein.

Das Getriebe kann ein Schneckengetriebe, das Abtriebsrad ein Schneckenrad und die Antriebsanrichtung eine Schneckenwelle umfassen. In einer Variante kann das Abtriebsrad auch ein Schraubrad sein, so dass das Getriebe ein Schraubradgetriebe umfasst. So kann auf einfache Weise ein selbstsperrendes Getriebe mit dem beschriebenen, vorbestimmten Zusammenhang zwischen dem Fernflankenspiel und dem Drehwinkel bereitgestellt sein.

In einer weiteren bevorzugten Ausführungsform ist das Abtriebsrad nicht vollständig sondern reduziert als Antriebssegment ausgeführt, das beide Wendepositionen umfasst. So kann ein Bauraum des Scheibenwischerantriebs minimiert sein. Ferner können dadurch Produktionskosten eingespart werden.

Die Erfindung wird nun mit Bezug auf die beigefügten Figuren genauer beschrieben, in denen:

Figur 1    eine Scheibenwischeinrichtung an einem Kraftfahrzeug;

Figur 2    einen wirksamen Radius des Antriebsrads aus Figur 1 in Abhängigkeit zu einem Drehwinkel;

Figur 3    ein Zahnflankenspiel des Antriebsrads aus Figur 1 in Abhängigkeit zu einem Drehwinkel, und

Figur 4    geometrische Zusammenhänge am Antriebsrad aus Figur 1

darstellen.

Genaue Beschreibung von Ausführungsbeispielen

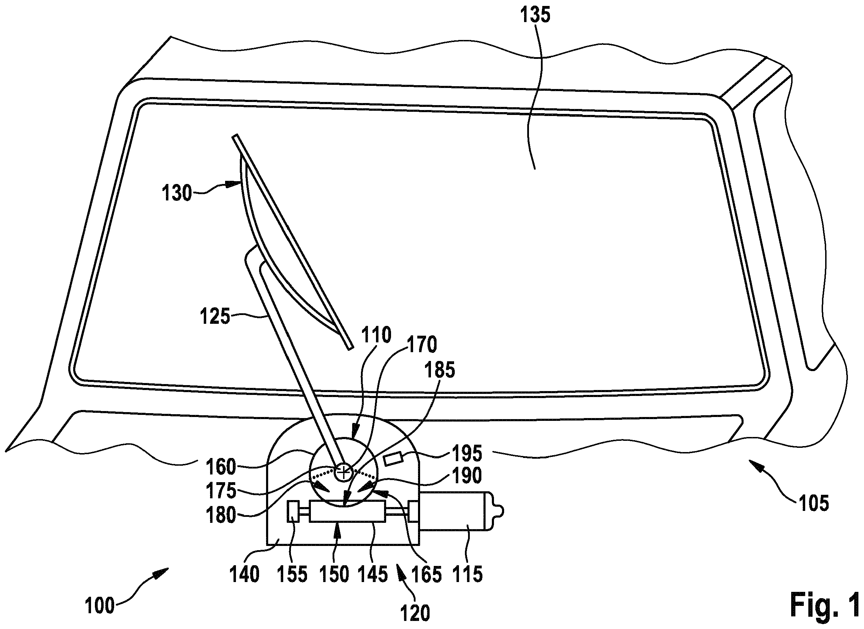

Figur 1 zeigt eine schematische Darstellung einer Scheibenwischeinrichtung 100 an einem Kraftfahrzeug 105. Die Scheibenwischeinrichtung 100 umfasst einen Scheibenwischerantrieb 110, der seinerseits einen Elektromotor 115 und ein Getriebe 120 umfasst, einen Wischerarm 125 und ein Wischerblatt 130. Die Scheibenwischeinrichtung 100 ist dazu eingerichtet, das Wischerblatt 130 in einer oszillierenden Bewegung über eine Sichtscheibe 135 des Kraftfahrzeugs 105 zu führen, um die Sichtscheibe 135 von Feuchtigkeit und/oder Schmutz zu befreien. Die Sichtscheibe 135 kann beispielsweise eine Front- oder Heckscheibe des Kraftfahrzeugs 105 sein.

Das Getriebe ist üblicherweise ein Untersetzungsgetriebe und umfasst eine Antriebseinrichtung 145 mit einer Verzahnung 150 und ein Abtriebsrad 160 mit einer Verzahnung 165, die ineinander kämmen. Das Abtriebsrad 160 muss nicht als vollständiges Rad ausgeführt sein, sondern kann auch als ausreichend großes Abtriebssegment ausgebildet sein. Das Abtriebsrad 160 ist drehbar um eine Drehachse 170 gelagert und konzentrisch mit einer Abtriebswelle 175 verbunden.

Durch die Geometrie des Wischerarms 125, des Wischerblatts 130 und der Sichtscheibe ist ein Drehwinkel des Abtriebsrad 160 beschränkt, so dass im Betrieb der Scheibenwischereinrichtung 100 nur ein Teil des Umfangs des Abtriebsrads 160 mit der Antriebseinrichtung 145 in Kontakt kommt. Der überstrichene Bereich des Umfangs des Abtriebsrads 160 wird begrenzt durch eine erste Wendeposition 180 und eine zweite Wendeposition 190, die zu den oberen und unteren Wendepositionen des Wischerarms 125 bzw. des Wischerblatts 130 korrespondieren. Weist eine der Wendepositionen 180 oder 190 am Abtriebsrad 160 auf die Antriebseinrichtung 145, so befindet sich der Wischerarm 125 in einer Position, in der seine Bewegungsrichtung umgekehrt wird. Vorzugsweise in der Mitte zwischen den Wendepositionen 180 und 190 des Abtriebsrads 160 befindet sich eine Mittelposition 185.

Die Verzahnung 165 des Abtriebsrads 160 ist so gestaltet, dass ein wirksamer Radius der Verzahnung 165 bezüglich einer Drehachse 170 des Abtriebsrads 160 zwischen den Wendepositionen 180 und 190 variiert. Der wirksame Radius (Teilkreisradius) einer Verzahnung 150, 165 ist gegeben durch einen Abstand der Verzahnung 150, 165 zu ihrem Mittelpunkt, wobei üblicherweise ein Abstand verwendet wird, der mittig zwischen den radial äußeren (Kopfkreisradius) und den radial inneren (Fußkreisradius) Enden der Zähne der Verzahnung 150, 165 liegt.

Im Bereich der Mittelposition 185 ist dieser wirksame Radius kleiner als im Bereich der Wendepositionen 180, 190. Dadurch ist ein Zahnflankenspiel zwischen den Verzahnungen 165 und 150 im Bereich der Mittelposition 185 größer als in den Wendepositionen 180, 190, die zu den Wendepositionen des Wischerarms 125 bzw. des Wischerblatts 130 korrespondieren. So ist ein Spiel des Getriebes 120 in den Wendepositionen 180, 190 gering und nimmt zur Mittelposition 185 hin kontinuierlich ab.

In der dargestellten Ausführungsform umfasst das Getriebe 120 ein Schneckengetriebe, indem die Antriebseinrichtung 145 durch eine Schneckenwelle und das Abtriebsrad 160 als Schneckenrad gebildet ist. Die Schneckenwelle ist bevorzugterweise an einem Ende durch den Elektromotor 115 antreibbar und an einem dem Elektromotor 115 gegenüber liegenden Ende in einem Lager 155 bezüglich des Gehäuses 140 gelagert. In einer etwas abgeänderten Ausführungsform ist das Abtriebsrad 160 ein Schraubrad und keines der Getriebeteile 145, 160 ist in seiner Verzahnung globoidisch angepasst ist, so dass das Getriebe 120 ein Schraubradgetriebe umfasst.

Die Abtriebswelle 175 ist drehmomentschlüssig mit einem Ende des Wischerarms 125 verbunden, wobei das andere Ende des Wischerarms 125 mit dem Wischerblatt 130 verbunden ist.

Vorzugsweise ist am Abtriebsrad 160 ein Sensor 195 zur Bestimmung einer rotatorischen Position bzw. eines Drehwinkels des Abtriebsrads 160 angebracht. In einer Ausführungsform ist über den Sensor 195 lediglich bestimmbar, ob sich das Abtriebsrad 160 im Bereich einer der Wendepositionen 180 oder 190 befindet. In einer anderen Ausführungsform sind mittels des Sensors 195 auch dazwischen liegende Positionen bzw. Drehwinkel des Abtriebsrads 160 bestimmbar.

In einer anderen Ausführungsform wird als Getriebe 120 kein Schneckengetriebe oder Schraubradgetriebe sondern ein Stirnradgetriebe verwendet. Das mit der Abtriebswelle 175 verbundene Abtriebsrad 160 und die Antriebseinrichtung 145 sind in diesem Fall durch stirnverzahnte Zahnräder gebildet.

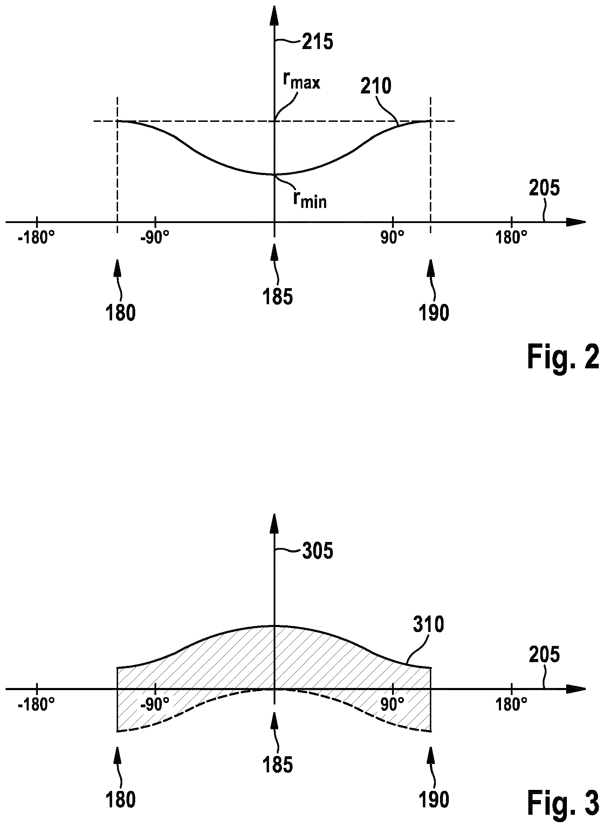

Figur 2 zeigt einen Zusammenhang zwischen einem wirksamen Radius und einem Drehwinkel. In horizontaler Richtung ist ein Drehwinkel 205 angetragen, dessen Nullpunkt im vorliegenden Fall mit der Mittelposition 185 zusammenfällt. Ohne Beschränkung der Allgemeinheit sind die Wendepositionen 180 und 190 bei ca. - 100° und + 100° angegeben. In vertikaler Richtung ist ein wirksamer Radius 215 der Verzahnung 165 des Abtriebsrads 160 angetragen. Je größer der wirksame Radius 215 ist, desto weiter entfernt liegt ein Angriffspunkt zwischen Zähnen der Verzahnung 165 des Abtriebsrads 160 mit Zähnen der Verzahnung 150 der Antriebseinrichtung 145 von der Drehachse 170 des Abtriebsrads 160 entfernt.

Ein Verlauf 210 bezeichnet den Zusammenhang zwischen dem Drehwinkel 205 und dem wirksamen Radius 215. Der Verlauf 210 ist symmetrisch zur Mittelposition 185, wo der wirksame Radius 215 minimal ist. Seinen höchsten Wert erreicht der wirksame Radius 215 im Bereich der Wendepositionen 180 und 190. Dazwischen ist der Verlauf 210 stetig und vermeidet starke Steigungsänderungen und Sprünge.

Figur 3 zeigt einen Zusammenhang zwischen einem Zahnflankenspiel 305 und dem Drehwinkel 205. Die Darstellung basiert auf der von Figur 2 und bezeichnet insbesondere das Zahnflankenspiel 305 der Verzahnung 165 des Antriebsrads 160 am Scheibenwischerantrieb 110 aus Figur 1.

Ein Verlauf 310 stellt den Zusammenhang dar. Der Verlauf 310 ist qualitativ bezüglich der vertikalen Achse invers zum Verlauf 215 des wirksamen Radius von Figur 2. Durch die Wahl eines vorbestimmten Abstandes zwischen Drehachsen des Abtriebsrads 160 und der Abtriebswelle 175 kann das Zahnflankenspiel 305 in konstanter Weise beeinflusst werden, sodass in der Darstellung von Figur 3 der Verlauf 310, wie in Figur 3 angedeutet ist, in vertikaler Richtung verschoben wird. Bevorzugter Weise wird der genannte Abstand so gewählt, dass das größte Zahnflankenspiel 305 im Bereich der Mittelposition 185 unter Berücksichtigung von Toleranzen der Verzahnung 165, einer Umgebungstemperatur, einer Quellung und anderen Einflussfaktoren noch ausreichend gering ist, um einen sicheren Betrieb zu gewährleisten. Gleichzeitig soll das Zahnflankenspiel 305 im Berech der Wendepositionen 180 und 190 klein genug sein, um eine vorbestimmte Positioniergenauigkeit bzw. eine ausreichende Klemmung erzielen zu können. Wird dadurch das Zahnflankenspiel 305 negativ, so ist die Klemmung zwischen dem Abtriebsrad 160 und der Antriebseinrichtung 145 erhöht.

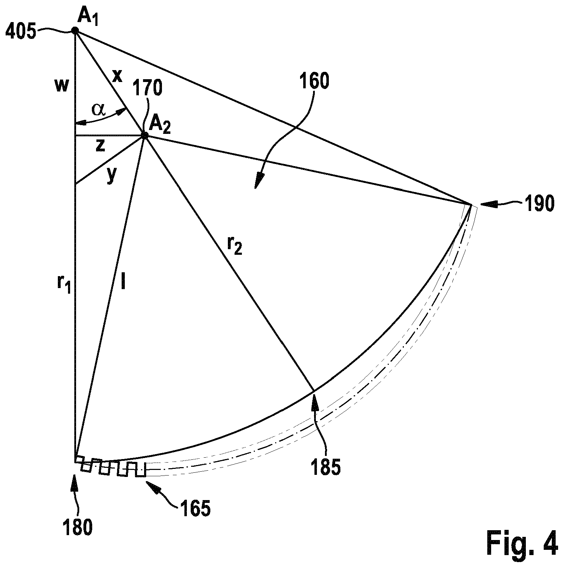

Figur 4 zeigt geometrische Zusammenhänge am Abtriebsrad 160 aus Figur 1. Gezeigt ist ein Segment des Abtriebsrads 160 um die Drehachse 170, wobei die Verzahnung 165 nach unten rechts weist. Das Segment erstreckt sich symmetrisch zwischen den Wendepositionen 180 und 190.

Die Verzahnung 165 ist bezogen auf den Verzahnungsmittelpunkt 405, der von der Mittelposition 185 aus auf der anderen Seite der Drehachse 170 liegt. Die Verzahnung 165 folgt daher zwischen den Wendepositionen 180 und 190 der unterbrochenen Linie, sodass ein wirksamer Radius zwischen der Drehachse 170 und der Verzahnung 165 über den Drehwinkel 205 veränderlich ist, wie oben beschrieben und in Figur 2 dargestellt ist.

Zur Bestimmung der Differenz der wirksamen Verzahnungsradien kann mit Bezug auf die Darstellung von Figur 4 folgenden Formel verwendet werden:

$$\Delta_a = \left[\left(r_1 - x\left(1 - \tan^4(\alpha)\right)\right)^2 + x^2 \tan^4(\alpha)\right]^{1/2} \qquad \text{(Formel 1)}$$

wobei gilt:

$\Delta_a = l - r_2$;

$A_1$: Verzahnungsmittelpunkt 405,

$A_2$: Drehachse 170,

l: Abstand zwischen der Drehachse $A_2$ und der Verzahnung 165 in einer der Wendepositionen 180 oder 190;

$r_1$: Radius der Verzahnung 165 um den Verzahnungsmittelpunkt $A_1$,

$r_2$: Abstand zwischen der Drehachse $A_2$ und der Verzahnung 165 in der Mittelposition 185, und $x = r_2 - r_1$.

**Patentansprüche**

1. Scheibenwischerantrieb (110) zum oszillierenden Antrieb einer Abtriebswelle (175) zwischen zwei Wendepositionen (180, 190), wobei der Scheibenwischerantrieb (110) folgendes umfasst:

   - ein verzahntes Abtriebsrad (160), das konzentrisch mit der Abtriebswelle (175) verbunden ist; und
   - eine verzahnte Antriebseinrichtung (145), die in dem Abtriebsrad (160) kämmt,
   - wobei das Abtriebsrad (160) derart ungleichmäßig geformt ist, dass ein Zahnflankenspiel (305) zwischen der Antriebseinrichtung (145) und dem Abtriebsrad (160) im Bereich der ersten Wendeposition (180) gegenüber dem Bereich zwischen den Wendepositionen (180, 190) verringert ist,

   **dadurch gekennzeichnet, dass**

   - ein Zusammenhang zwischen einem Drehwinkel (205) des Abtriebsrads (160) und dem Zahnflankenspiel (305) stetig ist.

2. Scheibenwischerantrieb (110) nach Anspruch 1, wobei das Zahnflankenspiel (305) in Bereichen beider Wendepositionen (180, 190) verringert ist und der Zusammenhang symmetrisch zu einer Mittelposition (185) ist, die zwischen den Wendepositionen (180, 190) liegt.

3. Scheibenwischerantrieb (110) nach Anspruch 1 oder 2, wobei ein Verzahnungsmittelpunkt (405) einer Verzahnung (165) des Abtriebsrads (160) gegenüber der Drehachse (170) des Abtriebsrads (160) versetzt ist.

4. Scheibenwischerantrieb (110) nach Anspruch 2 und 3, wobei der Verzahnungsmittelpunkt (405) bezüglich der Drehachse (170) einem Abschnitt der Verzahnung (165) gegenüber liegt, der sich mit der Antriebseinrichtung (145) in Eingriff befindet, wenn sich das Abtriebsrad (160) in der Mittelposition (185) befindet.

5. Scheibenwischerantrieb (110) nach einem der vorangehenden Ansprüche, wobei das Zahnflankenspiel (305) im Bereich einer der Wendepositionen (180, 190) negativ ist.

6. Scheibenwischerantrieb (110) nach einem der vorangehenden Ansprüche, wobei das Getriebe (120) ein Schneckengetriebe, das Abtriebsrad (160) ein Schneckenrad und die Antriebseinrichtung (145) eine Schneckenwelle umfasst.

7. Scheibenwischerantrieb (110) nach einem der vorangehenden Ansprüche, wobei das Getriebe (120) ein Schraubradgetriebe, das Abtriebsrad (160) ein Schraubrad und die Antriebseinrichtung (145) eine Schraubenwelle umfasst.

8. Scheibenwischerantrieb (110) nach einem der vorangehenden Ansprüche, wobei das Abtriebsrad (160) als Antriebssegment ausgeführt ist, das die Wendepositionen (180, 190) umfasst.

**Claims**

1. Windscreen wiper drive (110) for the oscillating drive of an output shaft (175) between two turning positions (180, 190), wherein the windscreen wiper drive (110) comprises the following:

   - a toothed output gear (160) which is connected concentrically to the output shaft (175); and
   - a toothed drive device (145) which meshes in the output gear (160),
   - wherein the output gear (160) is shaped non-uniformly in such a manner that a backlash (305) between the drive device (145) and the output gear (160) is reduced in the region of the first turning position (180) in relation to the region between the turning positions (180, 190),

**characterized in that**

- a correlation between a rotational angle (205) of the output gear (160) and the backlash (305) is constant.

2. Windscreen wiper drive (110) according to Claim 1, wherein the backlash (305) is reduced in the region of both turning positions (180, 190), and the correlation is symmetrical with respect to a centre position (185) which lies between the turning positions (180, 190).

3. Windscreen wiper drive (110) according to Claim 1 or 2, wherein a toothing centre point (405) of a toothing (165) of the output gear (160) is offset with respect to the axis of rotation (170) of the output gear (160).

4. Windscreen wiper drive (110) according to Claims 2 and 3, wherein the toothing centre point (405) lies with respect to the axis of rotation (170) opposite a portion of the toothing (165) which is in engagement with the drive device (145) when the output gear (160) is in the centre position (185).

5. Windscreen wiper drive (110) according to one of the preceding claims, wherein the backlash (305) is negative in the region of one of the turning positions (180, 190).

6. Windscreen wiper drive (110) according to one of the preceding claims, wherein the gear mechanism (120) comprises a worm mechanism, the output gear (160) comprises a worm gear and the drive device (145) comprises a worm shaft.

7. Windscreen wiper drive (110) according to one of the preceding claims, wherein the gear mechanism (120) comprises a helical gear mechanism, the output gear (160) comprises a helical gear and a drive device (145) comprises a screw shaft.

8. Windscreen wiper drive (110) according to one of the preceding claims, wherein the output gear (160) is designed as a drive segment which comprises the turning positions (180, 190).

**Revendications**

1. Entraînement d'essuie-glace (110) pour l'entraînement en oscillation d'un arbre de prise de force (175) entre deux positions d'orientation (180, 190), l'entraînement d'essuie-glace (110) comprenant :

- une roue dentée de prise de force (160) qui est connectée concentriquement à l'arbre de prise de force (175) ; et
- un dispositif d'entraînement denté (145) qui s'engrène dans la roue de prise de force (160),
- la roue de prise de force (160) étant formée de manière non uniforme de telle sorte qu'un jeu des flancs de dents (305) entre le dispositif d'entraînement (145) et la roue de prise de force (160) dans la région de la première position d'orientation (180) soit réduit par rapport à la région entre les positions d'orientation (180, 190),

**caractérisé en ce**

- **qu'**une relation entre un angle de rotation (205) de la roue de prise de force (160) et le jeu des flancs de dents (305) est constante.

2. Entraînement d'essuie-glace (110) selon la revendication 1, dans lequel le jeu des flancs de dents (305) dans les régions des deux positions d'orientation (180, 190) est réduit et la relation est symétrique par rapport à une position médiane (185) qui est située entre les positions d'orientation (180, 190).

3. Entraînement d'essuie-glace (110) selon la revendication 1 ou 2, dans lequel un centre de denture (405) d'une denture (165) de la roue de prise de force (160) est décalé par rapport à l'axe de rotation (170) de la roue de prise de force (160) .

4. Entraînement d'essuie-glace (110) selon les revendications 2 et 3, dans lequel le centre de denture (405), par rapport à l'axe de rotation (170), est opposé à une portion de la denture (165) qui est en prise avec le dispositif d'entraînement (145) lorsque la roue de prise de force (160) se trouve dans la position médiane (185).

**5.** Entraînement d'essuie-glace (110) selon l'une quelconque des revendications précédentes, dans lequel le jeu des flancs de dents (305) dans la région de l'une des positions d'orientation (180, 190) est négatif.

**6.** Entraînement d'essuie-glace (110) selon l'une quelconque des revendications précédentes, dans lequel la transmission (120) comprend une transmission à vis sans fin, la roue de prise de force (160) comprend une roue hélicoïdale et le dispositif d'entraînement (145) comprend un arbre à vis sans fin.

**7.** Entraînement d'essuie-glace (110) selon l'une quelconque des revendications précédentes, dans lequel la transmission (120) comprend une transmission à roue hypoïde, la roue de prise de force (160) comprend une roue hypoïde et le dispositif d'entraînement (145) comprend un arbre d'hélice.

**8.** Entraînement d'essuie-glace (110) selon l'une quelconque des revendications précédentes, dans lequel la roue de prise de force (160) est réalisée sous forme de segment d'entraînement qui comprend les positions d'orientation (180, 190).

Fig. 1

EP 2 819 895 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008054557 A1